Europäisches Patentamt

European Patent Office

Office européen des brevets

(19)

(11) Publication number: **0 172 142**
A2

(12) # EUROPEAN PATENT APPLICATION

(21) Application number: **85830151.8**

(22) Date of filing: **17.06.85**

(51) Int. Cl.⁴: **B 32 B 31/12**
**B 32 B 3/28, B 65 D 81/14**

(30) Priority: **21.06.84 IT 6763884**

(43) Date of publication of application:
**19.02.86 Bulletin 86/8**

(84) Designated Contracting States:
**AT BE CH DE FR GB LI LU NL SE**

(71) Applicant: TEPAK S.r.l.
Via Susa 25
I-10040 Caselette (Torino)(IT)

(72) Inventor: Tessera Chiesa, Luigi
Corso Galileo Ferraris 55
I-10128 Torino(IT)

(74) Representative: Buzzi, Franco et al,
c/o Jacobacci-Casetta & Perani S.p.A. Via Alfieri, 17
I-10121 Torino(IT)

(54) **Process for joining by heat-welding an olefine polymer film to a sheet of paper-like material, and padded packaging produced by this process.**

(57) A process for joining by heat-welding an olefine polymer film to a support sheet of paper-like material, without the interposition of a substance capable of increasing the chemical affinity between these materials or of effecting a glueing action.

The process consists of subjecting the film and the sheet to a pretreatment involving surface activation by means of a direct flame or a corona-effect electric discharge.

Applicable to the manufacture of products for padded packaging formed by polyethylene sheets with air bubbles, heat-welded to sheets of non-polyethylene paper.

EP 0 172 142 A2

- 1 -

0172142

Process for joining by heat-welding an olefine polymer film
to a support sheet of paper-like material, and a product for
padded packaging obtained by such a process.

The present invention relates in general to the
manufacture of laminated products obtained by
joining an olefine polymer material in sheet form
to a support sheet of paper-like material.

The invention refers more particularly to the
manufacture of products for padded packaging
comprising one or more polyethylene sheets with
air bubbles,joined to one or more support
sheets of paper-like material.

Traditionally for the manufacture of these and
like products it is necessary, before proceeding
to join the two sheets, to interpose between
them an intermediate layer which has a glueing
action or is capable of increasing the chemical
affinity between the two materials.  In
particular, since the joining of the two sheets
is normally effected by heat-welding, it is
necessary to coat the joining surface of the
sheet of paper-like material with a layer of
olefine polymer material, generally by  fusion
and extrusion processes starting with granules
of this material.  These granules are heated until
they melt and are then extruded through a linear
extruder,in such a way as to obtain a fused film
which is bonded to the paper-like support by
means of pressure applied by a cylinder and
cooled counter-cylinder.

The necessity of coating the paper-like support
derives from the fact that the polyolefine resins are, as is known, chemically inert,
which has to date prevented any direct joining
thereof to the paper using conventional processes
of heat-welding normally adopted for example,
in the field of the manufacture of laminated
products for packaging.

The necessity of using paper coated with a
polyolefine film involves considerable
disadvantages due to the cost of the paper
thus treated, which leads, on the one hand, to
a high selling price for products made therefrom
and, on the other hand, to considerable
problems  of supplying the paper-like material
thus treated by the manufacturers of such
products.

The Applicant has now observed, in a surprising
manner and in contrast to the prejudices hitherto
rooted in this sector of the prior art, that
the interposition of an intermediate layer for
the purpose of increasing the chemical affinity
between the sheet of polyolefine material and
the support sheet of paper-like material to be
joined together is not in fact necessary,
provided recourse is had to a particular preliminary
treatment of the surfaces of the two sheets
intended to be joined together.

The main object of the present invention is,
therefore, the provision of a process that permits
the direct joining of a sheet of olefine polymer
material to a support sheet of paper-like material.

A more particular object of the invention is that of carrying out a process which permits the production of a product for padded packaging by means of the direct joining of a polyethylene sheet with air bubbles to a non-polyethylene paper-like sheet.

A further more particular object of the invention is that of providing a padded envelope formed by two sheets of non-polyethylene paper-like material and by two sheets of polyethylene material with air bubbles, interposed between the two sheets of paper-like material and having respective margins joined together and directly joined to the corresponding margins of the two sheets of non-polyethylene paper-like material.

The process according to the invention is characterised in that it includes the operations of subjecting the surfaces of the sheets of olefine polymer material and of the paper-like material intended to be joined together to a pretreatment of surface activat  to effect a partial oxidation of said surfaces, and directly heat-welding together the surfaces thus pretreated.

The treatment of surface activation may consist of a direct flame treatment or alternatively, of a  corona-effect electric discharge treatment.

In both the cases there are generated on the sheet surfaces to be joined, functional chemical groups between which chemical bonds may be formed following the heat-welding operation.

The methods by which these surface activation treatments are conducted are, in any given case, comparable with those adopted in treatments of the same type conducted, for totally different purposes, on polyolefine resin films so as to ensure the firm adhesion of printing inks.

It therefore proves possible for the pretreatment phase contemplated in the process according to the invention to be carried out, whether with regard to the polymer material or with regard to the paper-like material, by using the same equipment as is available commercially for the treatment prior to printing of polyolefine films.

The invention will now be described in more detail with reference to an example of a process for the manufacture of a padded envelope illustrated in the appended drawings, in which:

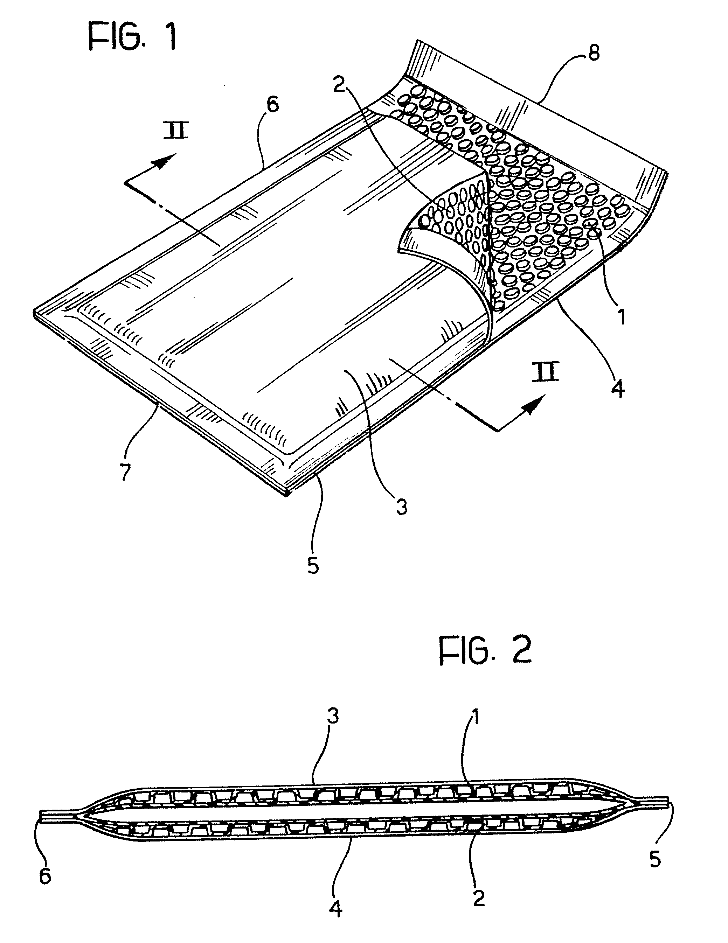

Figure 1 is a perspective view of the envelope, and

Figure 2 is a transverse sectional view along the line II-II in Figure 1.

The envelope illustrated in the drawings is conventionally composed of two sheets of polyolefine material with air bubbles 1, 2, each of which in turn comprises in a conventional manner two polyethylene films joined together in a manner known in the prior art, and two outer sheets of paper or thin card 3, 4.

The sheets 1-4 are rectangular in form and are joined together by means of heat-welding along the two longer sides 5, 6 and along one of the shorter sides 7 of the envelope, whilst they remain separate from each other along the opposite shorter side 8, which therefore constitutes the open end of the envelope.

In known envelopes of the type illustrated, the internal faces of the paper or cardboard sheets 3 and 4 are made of polyethylene, in such a way as to permit the joining thereto, by means of heat-welding, of the two polyethylene sheets with air bubbles 1 and 2.

This is not the case for the envelope illustrated in the example in that, according to the invention, there are no polyethylene film coatings on the internal faces of the paper sheets 3 and 4, nor is there any application of other intermediate materials capable of increasing the chemical affinity between the paper and the polyethylene or of effecting a glueing action.

According to the invention the manufacturing process for the envelope provides, however, for a pretreatment of surface activation both of the external faces of the two polyethylene sheets 1 and 2, and of the internal faces of the paper sheets 3 and 4.

This surface activation treatment consists in practical terms of achieving a partial oxidation of the surfaces of the sheets 1, 2 and 3, 4 intended to be joined together, in such a way as to generate on these surfaces functional chemical groups between which chemical bonds may be formed upon the successive operation of heat-bonding.

The surface activation phase may be carried out either by means of a controlled direct flame treatment, or through an electrical discharge treatment by the corona effect, on the said surfaces.

In either case, use is made of equipment available commercially and normally used in the field of packaging so as to permit printing, and thus the adhesion of printing inks, on polyolefine resin films.

For the direct flame treatment it is possible, for example, to use devices with gas burners produced and marketed by the British companies, WSA COMPONENTS LIMITED and FLYNN BURNER CORPORATION.

This equipment generally comprises a conveyor in the path of advance of which there are positioned one or more controlled-combustion burners. In the process according to the invention for the manufacture of padded envelopes four such devices are used, including two for the treatment of respective webs of polyethylene with air bubbles and two for respective webs or paper. These webs are successively brought together by means of apparatus conventional in the field of padded envelopes, and successively joined together and subdivided, in the manner hereinafter described, so as to form the sheets 1, 2 and 3, 4 constituting the envelope.

For the treatment with electric discharge by the corona effect, use is made of apparatus comprising a high-frequency generator and a high-voltage generator connected to an electrode. The material to be treated is made to pass through a gap between the electrode and a dielectric support material. In this case also, for the process according to the invention, it is convenient to use four devices, respectively for the two webs of polyethylene with air bubbles from which the sheets 1 and 2 will be successively formed, and for the webs of paper from which the paper sheets 3 and 4 will be formed.

Apparatus for the corona-effect treatment of polyolefine resin films intended to be printed is produced and marketed,for example, by the British company AHLBRANDT SYSTEMS, as well as by the Italian companies FERRADINI & BENELLI s.r.l. and SCAE S.p.A.

Subsequent to the aforesaid pretreatment, the webs of polyethylene with air bubbles and of paper are matched together in the manner described in the foregoing by means of conventional apparatus,and are joined along their longitudinal edges by means of heat-welding. This operation is carried out in a manner known in the art, by means of longitudinal welding bars or by means of heated wheels between which the matched webs are made to pass.

Finally there is carried out a transverse heat-welding process at prearranged spatial intervals along the webs, with subsequent transverse cutting of the webs of paper in such a way as to separate the heat-welded product from these webs. There is thus clearly obtained the envelope illustrated in the drawings, with the sheets of polyethylene with air bubbles 1, 2 and the sheets of paper 3, 4 directly joined together by means of heat-welding along the sides 5, 6 and 7.

The process according to the invention is applicable not only to the manufacture of padded envelopes of the type described above, but also to padded packaging of various types, such as, for example, simple padded sheets for the wrapping of packs, formed by a single sheet of polyethylene with air bubbles joined to a sheet of paper. In this case the pretreatment involving surface activation and the subsequent joining by means of heat-welding of the two sheets are carried out in a manner entirely analogous to that previously described.

In more general terms, the process is applicable to all cases in which it is necessary to join by means of heat-welding an olefine polymer sheet or film to a support sheet of paper-like material.

0172142

CLAIMS

1. A process for joining an olefine polymer sheet to a support sheet of paper-like material, characterised in that it includes the operations of subjecting the surfaces of the two sheets intended to be joined together to a pretreatment of surface activation to effect a partial oxidation of the said surfaces, and of directly heat-welding together the surfaces thus pretreated.

2. A process according to Claim 1, characterised in that the pretreatment of surface activation consists of a direct flame treatment.

3. A process according to Claim 1, characterised in that the pretreatment of surface activation consists of an electric discharge treatment by the corona effect.

4. Laminated material including an olefine polymer sheet joined to a sheet of paper-like material without interposition between the said sheets of any intermediate layer for increasing the chemical affinity between the said materials or for effecting a glueing action, obtained by the process according to Claim 2 or Claim 3.

5. A process for manufacturing a product for padded packaging comprising a polyethylene sheet with air bubbles and a sheet of non-polyethylene paper-like material, characterised in that it includes the operations of subjecting the surfaces of the two sheets intended to be joined together to a pretreatment of surface activation to obtain a partial oxidation of the said surfaces, and of directly heat-welding together the surfaces thus pretreated.

6. A process according to Claim 5, characterised in that the pretreatment of surface activation consists of a direct flame treatment.

7. A process according to Claim 5, characterised in that the surface activation pretreatment consists of an electric discharge treatment by the corona effect.

8. A product for padded packaging comprising a polyethylene sheet with air bubbles and a sheet of non-polyethylene paper-like material joined together by means of the process according to Claim 6 or Claim 7.

9. A process for manufacturing a padded envelope formed by two outer sheets of non-polyethylene paper-like material and by two inner polyethylene sheets with air bubbles, interposed between the two paper-like sheets and having their respective margins joined together and to the corresponding margins of the two sheets, characterised in that the joining of the said sheets includes the operations of subjecting the surfaces of the sheets intended to be joined together to a surface activation pretreatment to effect a partial oxidation of the said surfaces, and of directly heat-welding together the surfaces thus pretreated.

10. A process according to Claim 9, characterised in that the surface activation pretreatment consists of a direct flame treatment.

11. A process according to Claim 9, characterised in that the surface activation pretreatment consists of an electric discharge treatment by the corona effect.

12. A padded envelope formed by two outer sheets of non-polyethylene paper-like material and by two inner sheets of polyethylene with air bubbles, interposed between the two sheets of paper-like material and having their respective margins joined together and to the corresponding margins of the two sheets by means of the process according to Claim 10 or Claim 11.

FIG. 1

FIG. 2